(19) Europäisches Patentamt
European Patent Office
Office européen des brevets

(11) **EP 4 019 600 A1**

(12) **EUROPEAN PATENT APPLICATION**

(43) Date of publication:
**29.06.2022 Bulletin 2022/26**

(21) Application number: **20217130.2**

(22) Date of filing: **23.12.2020**

(51) International Patent Classification (IPC):
*C09D 191/00* (2006.01)    *C09D 167/08* (2006.01)
*B27K 3/00* (2006.01)

(52) Cooperative Patent Classification (CPC):
(C-Sets available)
**C09D 191/005; B27K 3/00; C09D 167/08**    (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Muylle-Facon N.V.**
**8870 Izegem (BE)**

(72) Inventors:
• **VERDUYN, Arne**
  **8560 Moorsele (BE)**
• **DE MEYER, Elke**
  **8501 Heule (BE)**
• **TORFS, Jan**
  **2340 Beerse (BE)**

(74) Representative: **Gevers Patents**
**Intellectual Property House**
**Holidaystraat 5**
**1831 Diegem (BE)**

(54)    **WOOD COATING COMPOSITIONS**

(57)    The present invention relates to an improved wood coating composition [composition (C), herein after] wherein said composition (C) comprises, relative to the total weight of composition (C), from 58.00 to 95.00 weight percentage [wt. %, herein after] of at least one alkyd resin or at least one drying oil, from 0.10 to 8.00 wt. % of at least one microcrystalline wax having a congealing point from 60 °C to 100 °C [microcrystalline wax ($W_c$), herein after], and from 1.00 to 34.00 wt. % of at least one micronized wax having a particle size $D_{90}$ equal to or less than 36 $\mu$m and a particle size $D_{50}$ equal to or less than 20 $\mu$m [micronized wax ($M_p$), herein after], wherein the congealing point of the microcrystalline wax ($W_c$) is measured according to the standard ASTM D938, and wherein the particle size of the at least one micronized wax ($M_p$) is measured according to the standard DIN ISO 13320. The invention further relates to methods for manufacturing of the composition (C), and to methods for treating wood products wherein said wood products are treated with the composition (C).

EP 4 019 600 A1

(52) Cooperative Patent Classification (CPC): (Cont.)

C-Sets
**C09D 167/08, C08L 91/06, C08L 91/08;**
**C09D 191/005, C08L 91/06, C08L 91/08**

**Description**

FIELD OF THE INVENTION

The present invention relates to wood coating compositions for the preservation and the protection of wood products, said wood coating compositions providing a high thermal stability, stability against phase separation, and an excellent spreadability, while maintaining good hardness, abrasion resistance, scratch resistance, matting, antiblocking, water repellency, and slip resistance properties. The invention further relates to methods for manufacturing of the same, to methods for treating wood products wherein said wood products are treated with the wood coating compositions, and to coated layers obtained by said methods for treating wood products wherein said wood products are treated with the wood coating compositions.

BACKGROUND OF THE INVENTION

Wood, as a natural hybrid composite material made of biopolymers such as cellulose, lignin and hemicelluloses, represents a versatile and widely exploited renewable resource for indoor and outdoor applications such as building, construction, and living. It has been used by mankind since thousands of years. Even today wooden furniture, floorings and articles of daily use experience great popularity. Wood provides high versatility and stability in combination with excellent workability, but, on the other hand, wood is sensitive to external influences such as abrasion, humidity, temperature variations, or germs. For instance, solid hardwood flooring and engineered wood flooring have long been a highly desirable house feature in the sense of warmth, tradition, and durability. However, hardwood floors are particularly prone to damage from accumulated foot traffic, wear and tear, and moisture. Therefore, for many years, wood coating compositions are applied to hardwood floors in order to preserve and protect the wood from deterioration, scratches, spills and stains, moisture, and the wear and tear caused by foot traffic, while maximizing, when desired, the appearance of the hardwood floors. Nowadays, many different wood coating compositions for solid hardwood floorings and engineered wood floorings exist, each of those wood coating compositions thereby demonstrating one or more of the properties such as water repellency, abrasion resistance, scratch resistance, matting, antiblocking, and slip resistance. Whereupon each wood coating has to meet individual requirements depending on the use of the wood product. This confronts wood coating formulators consistently with new challenges.

Examples of coating compositions for coating materials are for instance described in US 2003/0154885 A1. US 2003/0154885 A1 generally describes the use of mixtures of waxes for coatings. These wax mixtures comprise homopolymers or copolymers of $C_2$ - $C_{18}$ $\alpha$-olefins, and at least another wax which can be selected from a large variety of waxes such as polyethylene waxes, polytetrafluoroethylene waxes, polypropylene waxes, amide waxes, Fischer-Tropsch paraffines, montan waxes, natural waxes, macrocrystalline and microcrystalline paraffines, and the like. The wax mixtures are preferably used in micronized form as illustrated in the working examples in which 2% by weight of some micronized wax mixtures were incorporated into 98% by weight of an alkyd resin varnish for the purpose of assessing the blocking properties and the feel.

US 2007/0037001 A1 discloses oil/wax coating compositions which provide good water resistance and dimensional stability to wood and wood products. The oil component may be drying oils, non-drying oils, low boiling oils, and high boiling oils. In the working examples use is made of linseed oil alone or in combination with mineral oil. A large variety of waxes are mentioned to be suitable for use. In the working examples only a paraffin wax was used. It is known that wax is widely used to provide water repellency and dimensional stability. US 2007/0037001 A1, demonstrates that both water repellency and dimensional stability of wood improve upon treatment with these oil/wax coating compositions.

US 4,857,578 A describes protective water repellent wood coating compositions for wood substrates to prevent delamination of successive coating layers while providing intercoat adhesion and water repellency. These protective coating compositions are uniformly dispersed mixtures composed of an alkyd resin as major compound, polytetrafluoroethylene (PTFE), a microcrystalline wax and an organic solvent. The role of the organic solvent is to solubilize the alkyd resin and to provide the medium for the dispersion of the PTFE and the microcrystalline wax. Mention is made of organic solvents such as mineral spirits, naphtha, mixed xylenes, toluene and the like. The drawback of these compositions is the presence of high amounts of this organic solvent. Such organic solvents are nowadays subject to strict EPA regulations. The coatings as disclosed in US 4,857,578 A can have a thickness in the range from about 1 dry mil (i.e. 25.4 micron) to about 5 dry mils (i.e. 127 micron) while maintaining the benefits of improved water repellency and though nonwettability.

In view of all the above, there remains a continuous need for improved wood coating compositions for the preservation and the protection of wood products, said improved coating compositions having a high thermal stability, stability against phase separation, and an excellent spreadability, thereby allowing the respective coating compositions to be used in low amounts resulting in thin coating layers upon application to wood products, while maintaining good hardness, abrasion resistance, scratch resistance, matting, antiblocking, water repellency, and slip resistance properties.

## SUMMARY OF THE INVENTION

The inventors have now surprisingly found that it is possible to provide an improved wood coating composition fulfilling the above-mentioned needs.

Thus, there is now provided a wood coating composition [composition (C), herein after] comprising, relative to the total weight of the composition (C):

- from 58.00 to 95.00 weight percentage [wt. %, herein after] of at least one alkyd resin or at least one drying oil;
- from 0.10 to 8.00 wt. % of at least one microcrystalline wax having a congealing point from 60 °C to 100 °C [microcrystalline wax $(W_c)$, herein after];
- from 1.00 to 34.00 wt.% of at least one micronized wax having a particle size $D_{90}$ equal to or less than 36.0 $\mu$m and a particle size $D_{50}$ equal to or less than 20.0 $\mu$m [micronized wax $(M_p)$, herein after];

wherein the congealing point of the microcrystalline wax $(W_c)$ is measured according to the standard ASTM D938, and wherein the particle size of the micronized wax $(M_p)$ is measured according to the standard DIN ISO 13320.

In another aspect, the present invention further provides a method for the manufacturing of the composition (C), as detailed above.

In another aspect, the present invention further provides a method for the treatment of a surface or at least part of a surface of a wood product wherein said wood product is treated with the composition (C), as detailed above.

In another aspect, the present invention further provides a coated layer obtained by the method for the treatment of the surface or at least part of the surface of the wood product wherein said wood product is treated with the composition (C), as detailed above.

## DETAILED DESCRIPTION

### **Composition (C)**

Within the context of the present invention, the term "comprising" should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a composition comprising components A and B" should not be limited to compositions consisting only of components A and B. It means that with respect to the present invention, the only relevant components of the composition are A and B. Accordingly, the terms "comprising" and "including" encompass the more restrictive terms "consisting essentially of" and "consisting of".

As used herein, the terms "optional" or "optionally" means that a subsequently described event or circumstance can or cannot occur, and that the description includes instances where said event or circumstance occurs and instances where it does not.

The inventors have surprisingly found that by using at least one alkyd resin or at least one drying oil, as detailed above, in combination with at least one microcrystalline wax $(W_c)$, as detailed above, and at least one micronized wax $(M_p)$, as detailed above, the resulting composition (C), as detailed above, yields a high thermal stability, stability against phase separation, and an excellent spreadability, thereby allowing the composition (C) to be used in low amounts resulting in thin coating layers upon application to wood products, as demonstrated in the working examples, while maintaining good hardness, abrasion resistance, scratch resistance, matting, antiblocking, water repellency, and slip resistance properties.

Within the context of the present invention, the expressions "at least one alkyd resin or at least one drying oil", "at least one microcrystalline wax $(W_c)$", and "at least one micronized wax $(M_p)$" are intended to denote one or more than one alkyd resin or one or more than one drying oil, one or more than one microcrystalline wax $(W_c)$, and one or more than one micronized wax $(M_p)$, respectively. Mixtures of alkyd resins or mixtures of drying oils, mixtures of microcrystalline waxes $(W_c)$, and mixtures of micronized waxes $(M_p)$ can also be used for the purpose of the invention, respectively.

In the rest of the text, the expressions "alkyd resin", "drying oil", "microcrystalline wax $(W_c)$", "and "micronized wax $(M_p)$" are understood, for the purposes of the present invention, both in the plural and the singular form, that is to say the composition (C) of the present invention may comprise one or more than one alkyd resin or one or more than one drying oil, one or more than one microcrystalline wax $(W_c)$, and one or more than one micronized wax $(M_p)$, respectively.

Within the context of the present invention, the expression "from 58.00 to 95.00 weight percentage [wt. %, herein after] of at least one alkyd resin or at least one drying oil" refers either to the amount of alkyd resin or to the amount of drying oil, when the composition (C) contains only one alkyd resin or only one drying oil, or to the sum of the amounts of alkyd resin or to the sum of the amounts of drying oil, when the composition (C) contains more than one alkyd resin or more than one drying oil. This being said, it means that it is necessary that, when more than one alkyd resin or more than one drying oil is present, then it is the sum of the amounts of each of said alkyd resin or each of said drying oil that ranges from 58.00 to 95.00 wt. %, relative to the total weight of the composition (C).

Within the context of the present invention, the term "alkyd resin" is intended to denote thermosetting polymers, chemically similar to polyester resins, obtained by subjecting a raw material composition comprising at least one polycarboxylic acid component, or the corresponding anhydrides of said at least one polycarboxylic acid component where they exist, [component (A), herein after], at least one polyalcohol component [component (B), herein after], and at least one monocarboxylic acid component, or the corresponding triglyceride of said at least one monocarboxylic acid component, [component (D), herein after] to one or more esterification and/or transesterification reactions.

The classification of alkyd resins is based on the nature of the component (D). Alkyd resins can be broadly classified into drying and non-drying types depending on the ability of their films to dry by air oxidation, i.e. autoxidative drying. This drying ability is derived from polyunsaturated components (D) in the alkyd resin composition. If drying oils, such as tung oil, or fatty acids thereof, are the sources of the component (D) for the alkyd resin, said alkyd resin belongs to the drying type. On the other hand, if non-drying oils, such as coconut oil, or fatty acids thereof, are the sources of the component (D) for the alkyd resin, said alkyd resin belongs to the non-drying type. The choice of the fatty acid residues further determines whether the alkyd resin is described as a long oil, medium oil, or short oil alkyd resin. For an alkyd resin, the oil length is defined as the wt. % of oil or triglyceride equivalent, or alternatively, as the wt. % of fatty acids in the finished resin. Alkyd resins are typically classified into four classes by oil length: very long over 70 %, long 56 - 70 %, medium 46 - 55 %, and short below 45 %.

Preferably, the alkyd resin is a drying alkyd resin. Drying alkyd resins suitable for use in the composition (C) of the present invention are those known to the skilled in the art. In particular, drying alkyd resins are polyesters which have been modified by addition of unsaturated fatty acids or the corresponding triglycerides thereof, said unsaturated fatty acids or the corresponding triglycerides thereof preferably being from plant or vegetable oils.

As used herein, the component (A) for preparing the drying alkyd resin, as detailed above, refers to a carboxylic acid having two or more carboxylic acid functional groups, such as ortho-phthalic acid or anhydride, isophthalic acid, terephthalic acid, 1,2-cyclohexanedicarboxylic acid or anhydride, 1,4-cyclohexanedicarboxylic acid, tetrahydrophthalic acid or anhydride, maleic anhydride, fumaric anhydride, adipic acid, azelaic acid, succinic acid or anhydride, sebacic acid, trimelletic acid or anhydride, itaconic acid, citraconic acid, pyromelletic acid or anhydride, or polymers or mixtures of two or more thereof. Preferably, the component (A), as detailed above, is selected from ortho-phthalic anhydride, isophthalic acid, 1,2-cyclohexanedicarboxylic anhydride, or mixtures of two or more thereof.

As used herein, the component (B) for preparing the drying alkyd resin, as detailed above, refers to an alcohol having two or more alcohol (i.e. hydroxyl) functional groups such as glycerol, diglycerol, glycol, sugar, sugar alcohol, and combinations thereof. Non-limiting examples of glycols include ethylene glycol, diethylene glycol, 1,2-propanediol, 1,3-propanediol, 1,4-butylene glycol, 1,3-butylene glycol, 2,3-butylene glycol, neopentyl glycol, 2-butyl-2-ethyl-1,3-propanediol, dipropylene glycol, hexane triol, dimethylpentane, dimethylolethane, trimethylolethane, trimethylolpropane, trimethylolbutane, di-trimethylolethane, di-trimethylolpropane, di-trimethylolbutane, or polymers or mixtures of two or more thereof. Non-limiting examples of sugars include glucose, sucrose, fructose, raffinose, maltodextrose, galactose, xylose, maltose, lactose, sorbitol, mannose, erythrose, pentaerythritol, dipentaerythritol, tripentaerythritol, or mixtures of two or more thereof. Non-limiting examples of sugar alcohols include erythritol, xylitol, malitol, mannitol, sorbitol, or mixtures of two or more thereof. Preferably, the component (B), as detailed above, is selected from glycerol, diglycerol, trimethylolpropane, pentaerythritol, or mixtures of two or more thereof.

As used herein, the component (D) for preparing the drying alkyd resin, as detailed above, refers to a monocarboxylic acid, or the corresponding triglyceride thereof, such as linseed fatty acid or linseed oil, sunflower fatty acid or sunflower oil, tung oil, safflower fatty acid or safflower oil, soybean fatty acid or soybean oil, poppy seed oil, tall oil, peanut oil, (dehydrated) castor fatty acid or (dehydrated) castor oil, corn oil, rapeseed oil, sesame seed oil, rice germ oil, cottonseed fatty acid or cottonseed oil, fish oil, herring oil, grape seed oil, flaxseed oil, chia oil, oiticica oil, menhaden oil, walnut oil, camelina oil, hemp seed oil, perilla oil, linoleic acid, α-linolenic acid, oleic acid, α-eleostearic acid, myristoleic acid, lauroleic acid, palmitoleic acid, or mixtures of two or more thereof. Preferably, the component (D), as detailed above, is selected from linseed oil, tung oil, perilla oil, poppy seed oil, tall oil, walnut oil, soybean oil, sunflower oil, safflower oil, flaxseed oil, grape seed oil, oiticica oil, cottonseed oil, fish oil, sesame seed oil, rice germ oil, camelina oil, rapeseed oil, corn oil, hemp seed oil, herring oil, chia oil, peanut oil, (dehydrated) castor oil, or mixtures of two or more thereof. The drying ability of the drying alkyd resin as used in the present invention is mainly derived from the presence of the component (D) in the alkyd resin composition.

According to the present invention, various proportions of the component (A), the component (B), and the component (D) may be used to obtain the drying alkyd resins having the desired drying properties.

The alkyd resin of the present invention may be commercially available or may be chemically synthesized. Said synthesis of the alkyd resin may be carried out using conventional methods known to the skilled in the art.

It is further understood that all definitions and preferences as described for the at least one alkyd resin above equally apply for this embodiment and all further embodiments, as described below.

Within the context of the present invention, the term "drying oil" is understood to refer to unsaturated fatty oils that are liquid oils that crosslink and solidify by reaction with atmospheric oxygen.

As an alternative to the use of drying alkyd resins, as detailed above, in the composition (C) of the present invention, drying oils alone can also be used.

As non-limiting examples of suitable drying oils to be used in the composition (C) of the present invention mention may be made of linseed oil, sunflower oil, tung oil, safflower oil, soybean oil, poppy seed oil, tall oil, peanut oil, (dehydrated) castor oil, corn oil, rapeseed oil, sesame seed oil, rice germ oil, cottonseed oil, fish oil, herring oil, grape seed oil, flaxseed oil, chia oil, oiticica oil, menhaden oil, walnut oil, camelina oil, hemp seed oil, perilla oil, or mixtures of two or more thereof.

Preferred drying oils are chosen among linseed oil, sunflower oil, tung oil, safflower oil, soybean oil, poppy seed oil, tall oil, peanut oil, (dehydrated) castor oil, corn oil, rapeseed oil, sesame seed oil, rice germ oil, cottonseed oil, fish oil, herring oil, grape seed oil, flaxseed oil, chia oil, oiticica oil, walnut oil, camelina oil, hemp seed oil, or perilla oil.

More preferred drying oils are chosen among linseed oil, sunflower oil, tung oil, soybean oil, poppy seed oil, tall oil, walnut oil, hemp seed oil, or perilla oil. The inventors have found that for all of these more preferred drying oils [drying oil of class (I), herein after] good results can be obtained.

It is further understood that all definitions and preferences as described for the at least one drying oil above equally apply for this embodiment and all further embodiments, as described below.

As said above, the amount of the at least one alkyd resin or the at least one drying oil, as detailed above, is from 58.00 to 95.00 wt. %, relative to the total weight of the composition (C).

The inventors have surprisingly found that the alkyd resin or the drying oil can now be used in high amounts, relative to the total weight of the composition (C), thereby especially assuring optimal drying properties upon application of said composition (C) to wood products while maintaining excellent binder properties and good dispersibility of the microcrystalline wax ($W_c$), and the micronized wax ($M_p$) in said alkyd resin or drying oil. Furthermore, there is no need any more for organic solvents to solubilize the alkyd resin or the drying oil and to provide the medium for the dispersion of the microcrystalline wax ($W_c$), and the micronized wax ($M_p$).

Advantageously, the amount of the alkyd resin or the drying oil, as detailed above, relative to the total weight of the composition (C), is equal to or greater than 60.00 wt. %, preferably equal to or greater than 65.00 wt. %, more preferably equal to or greater than 70.00 wt. %.

It is further understood that the upper limit of the amount of the alkyd resin or the drying oil, as detailed above, relative to the total weight of the composition (C), is equal to or less than 93.50 wt. %, preferably equal to or less than 92.00 wt. %, more preferably equal to or less than 90.00 wt. %.

In a preferred embodiment of the composition (C) of the present invention, the alkyd resin or the drying oil, as detailed above, relative to the total weight of the composition (C), is present in an amount from 60.00 to 93.50 wt. %, preferably in an amount from 65.00 to 92.00 wt. %, more preferably in an amount from 70.00 to 90.00 wt. %.

As said above, the composition (C) of the present invention, relative to the total weight of the composition (C), further comprises from 0.10 to 8.00 wt. % of at least one microcrystalline wax having a congealing point from 60 °C to 100 °C [microcrystalline wax ($W_c$), herein after].

The inventors have surprisingly found that by choosing specific microcrystalline waxes ($W_c$) the high shear viscosity of the composition (C) of the present invention can be kept lower thereby leading to an excellent spreadability of the composition (C) upon application to wood products. Furthermore, the high shear viscosity of the composition (C) is also less prone to variations when subjected to variable thermal conditions, resulting in improved storage and transport properties of the composition (C) at extreme thermal conditions. In other words, the composition (C) is characterized by having a higher thermal stability. This also results in a more uniform and more constant spreadability of the composition (C), regardless of temperature, upon application of said composition (C) to wood products. Furthermore, the presence of the microcrystalline wax ($W_c$) leads to a higher low shear viscosity thereby ensuring the stability of the composition (C) against phase separation over time.

Within the context of the present invention, the term "microcrystalline wax ($W_c$)" is intended to denote a wax that is derived from de-oiling petrolatum during the refining process of crude petroleum. Microcrystalline wax ($W_c$) contains a high percentage of saturated isoparaffinic (branched) hydrocarbons, i.e. isoparaffins, and naphthenic hydrocarbons when compared to paraffin wax, which mainly contains unbranched alkanes. Furthermore, when compared to paraffin wax, the hydrocarbon chains in microcrystalline waxes ($W_c$) are longer than these of refined paraffin waxes, and thus the corresponding molecular weights of microcrystalline waxes ($W_c$) are higher than the molecular weights of paraffin waxes. Further, microcrystalline waxes ($W_c$) are particularly characterized by the fineness of its (colloidal micro)crystals in contrast to the larger crystals of more crystalline paraffin wax.

As said above, the at least one microcrystalline wax ($W_c$), as detailed above, has a congealing point from 60 °C to 100 °C.

Advantageously, the congealing point of the microcrystalline wax ($W_c$), as detailed above, is equal to or greater than 65 °C, preferably equal to or greater than 70 °C, more preferably equal to or greater than 75 °C, more preferably equal to or greater than 80 °C.

It is further understood that the upper limit of the congealing point of the microcrystalline wax ($W_c$), as detailed above, is equal to or less than 97 °C, preferably equal to or less than 94 °C, more preferably equal to or less than 92 °C, more preferably equal to or less than 90 °C.

In a preferred embodiment of the composition (C), the microcrystalline wax ($W_c$), as detailed above, has a congealing point from 65 °C to 97 °C, preferably from 70 °C to 94 °C, more preferably from 75 °C to 92 °C, more preferably from 80 °C to 90 °C.

According to the present invention, the congealing point of the microcrystalline wax ($W_c$) is measured according to ASTM D938, and is best interpreted as the "solidification point". The congealing point is a property which differs from the "melting point", which is preferably measured according to ASTM D127 "Drop melting point of petroleum wax including petrolatum". For some substances, the congealing point lies close to the higher melting point, but for other substances, in particular mixtures, the congealing point may sometimes be up to 10 °C lower than the melting point.

It is further understood that mixtures of microcrystalline waxes may be used in the composition (C) of the present invention. In this case, when mixtures of microcrystalline waxes are used in the composition (C), as detailed above, the congealing point of the at least one microcrystalline wax, as detailed above, is the congealing point of the mixture of microcrystalline waxes.

In one embodiment of the composition (C) according to the present invention, the microcrystalline wax ($W_c$), as detailed above, has a needle penetration value P of equal to or less than 90.0 dmm (0.1 mm), preferably equal to or less than 75.0 dmm, more preferably equal to or less than 50.0 dmm, more preferably equal to or less than 35.0 dmm, more preferably equal to or less than 25.0 dmm, more preferably equal to or less than 20.0 dmm.

It is further understood that the lower limit of the needle penetration value P of the microcrystalline wax ($W_c$), as detailed above, is not particularly limited but advantageously equal to or greater than 5.0 dmm, preferably equal to or greater than 7.0 dmm, more preferably equal to or greater than 9.0 dmm.

According to the present invention, the needle penetration value P of the microcrystalline wax ($W_c$), as detailed above, is measured according to ASTM D1321 at 25 °C.

It is further understood that mixtures of microcrystalline waxes ($W_c$) may be used in the composition (C) of the present invention. In this case, when mixtures of microcrystalline waxes ($W_c$) are used in the composition (C), as detailed above, the needle penetration value P of the microcrystalline wax ($W_c$), as detailed above, is the needle penetration value P of the mixture of microcrystalline waxes ($W_c$).

It is further understood that all definitions and preferences as described for the microcrystalline wax ($W_c$) above equally apply for this embodiment and all further embodiments, as described below.

As said above, the amount of the microcrystalline wax ($W_c$), as detailed above, is from 0.10 to 8.00 wt. %, relative to the total weight of the composition (C).

Within the context of the present invention, the expression "from 0.10 to 8.00 wt. % of at least one microcrystalline wax ($W_c$)" refers either to the amount of microcrystalline wax ($W_c$), when the composition (C) contains only one microcrystalline wax ($W_c$), or to the sum of the amounts of microcrystalline wax ($W_c$), when the composition (C) contains more than one microcrystalline wax ($W_c$). This being said, it means that it is necessary that, when more than one microcrystalline wax ($W_c$) is present, then it is the sum of the amounts of each of said microcrystalline wax ($W_c$) that ranges from 0.10 to 8.00 wt. %, relative to the total weight of the composition (C).

Advantageously, the amount of the microcrystalline wax ($W_c$), as detailed above, relative to the total weight of the composition (C), is equal to or greater than 0.15 wt. %, preferably equal to or greater than 0.20 wt. %, more preferably equal to or greater than 0.25 wt. %.

It is further understood that the upper limit of the amount of the microcrystalline wax ($W_c$), as detailed above, relative to the total weight of the composition (C), is equal to or less than 6.00 wt. %, preferably equal to or less than 5.00 wt. %, more preferably equal to or less than 4.00 wt. %, more preferably equal to or less than 3.00 wt. %, more preferably equal to or less than 2.00 wt. %.

In a preferred embodiment of the composition (C) of the present invention, the microcrystalline wax ($W_c$), as detailed above, relative to the total weight of the composition (C), is present in an amount from 0.15 to 6.00 wt. %, preferably in an amount from 0.15 to 5.00 wt. %, more preferably in an amount from 0.20 to 4.00 wt. %, more preferably in an amount from 0.20 to 3.00 wt. %, more preferably in an amount from 0.25 to 2.00 wt. %.

As said above, relative to the total weight of the composition (C), the composition (C) comprises from 1.00 to 34.00 wt. % of at least one micronized wax having a particle size $D_{90}$ equal to or less than 36 μm and a particle size $D_{50}$ equal to or less than 20 μm [micronized wax ($M_p$), herein after].

The use and presence of micronized waxes ($M_p$) has a decisive influence with regards to the resulting composition (C) according to the present invention having good abrasion resistance, scratch resistance, matting, antiblocking, water repellency, and slip resistance properties. Furthermore, the inventors have surprisingly found that by using a micronized wax having a specific particle size $D_{90}$ equal to or less than 36.0 $\mu$m and a particle size $D_{50}$ equal to or less than 20.0 $\mu$m, the resulting composition (C) yields an excellent spreadability upon its application to wood products. Without being bound to this theory, the inventors believe that by using a micronized wax having a specific particle size $D_{90}$ equal to or less than 36.0 $\mu$m and a particle size $D_{50}$ equal to or less than 20.0 $\mu$m in the composition (C), as detailed above, the resulting composition (C) demonstrates an improved spreadability since the micronized wax particles as comprised therein may be more in proportion to the average thickness of the coating layer upon application of the composition (C) to wood products, and furthermore said micronized wax particles may be more suitable to partly enter the pores on the surface of the wood products thereby leading to optimal resistance properties while applying the composition (C) to said wood products.

Advanteousgly, the micronized wax ($M_p$), as detailed above, has a particle size $D_{90}$ equal to or less than 32.0 $\mu$m and a particle size $D_{50}$ equal to or less than 18.0 $\mu$m, preferably a particle size $D_{90}$ equal to or less than 29.0 $\mu$m and a particle size $D_{50}$ equal to or less than 16.0 $\mu$m, more preferably a particle size $D_{90}$ equal to or less than 25.0 $\mu$m and a particle size $D_{50}$ equal to or less than 14.0 $\mu$m, more preferably a particle size $D_{90}$ equal to or less than 22.0 $\mu$m and a particle size $D_{50}$ equal to or less than 12.0 $\mu$m, more preferably a particle size $D_{90}$ equal to or less than 18.0 $\mu$m and a particle size $D_{50}$ equal to or less than 10.0 $\mu$m.

According to one embodiment of the composition (C) of the present invention, the particles of the micronized wax ($M_p$), as detailed above, have a particle size according to one of the following particle size distributions:

$D_{10} \leq 3.0$ $\mu$m and $D_{90} \leq 36.0$ $\mu$m and $D_{50} \leq 20.0$ $\mu$m;
preferably, $D_{10} \leq 3.0$ $\mu$m and $D_{90} \leq 32.0$ $\mu$m and $D_{50} \leq 18.0$ $\mu$m;
more preferably, $D_{10} \leq 3.0$ $\mu$m and $D_{90} \leq 29.0$ $\mu$m and $D_{50} \leq 16.0$ $\mu$m;
more preferably, $D_{10} \leq 3.0$ $\mu$m and $D_{90} \leq 25.0$ $\mu$m and $D_{50} \leq 14.0$ $\mu$m;
more preferably, $D_{10} \leq 3.0$ $\mu$m and $D_{90} \leq 22.0$ $\mu$m and $D_{50} \leq 12.0$ $\mu$m;
more preferably, $D_{10} \leq 3.0$ $\mu$m and $D_{90} \leq 18.0$ $\mu$m and $D_{50} \leq 10.0$ $\mu$m.

According to the present invention, a particle size of the micronized wax ($M_p$), as detailed above, expressed as $D_{xx} \leq Y$ denotes a percentage (xx%) by weight of particles of the micronized wax ($M_p$) having a particle size equal to or less than Y.

For example, $D_{90} \leq 32.0$ $\mu$m denotes that 90 wt. % of the particles of the micronized wax ($M_p$), as detailed above, has a particle size equal to or less than 32.0 $\mu$m.

According to the present invention, the particle size of the particles of the micronized wax ($M_p$) is measured according to DIN ISO 13320.

According to one embodiment of the composition (C) according to the present invention, the particle size distribution of the particles of the micronized wax ($M_p$), as detailed above, is characterized by a span value (SV) from 1.00 to 3.00, preferably from 1.00 to 2.50, preferably from 1.00 to 2.00.

Within the context of the present invention, the span value (SV) is defined as follows:

$$SV = \frac{(D_{90} - D_{10})}{D_{50}}$$

The span value (SV) characterizes the breadth of a particle size distribution. A small SV means that the particle size distribution is narrow, while a large SV means that the particle size distribution is broad.

The inventors have found that when the particle size distribution of the particles of the micronized wax ($M_p$), as detailed above, is narrow (small SV), the resulting composition (C), as detailed above, yields a further improved spreadability upon its application to wood products. Furthermore, when the particle size distribution of the particles of the micronized wax ($M_p$), as detailed above, is narrow (small SV), improved abrasion resistance, scratch resistance, and slip resistance properties are also obtained.

It is further understood that all definitions and preferences as described for the micronized wax ($M_p$) above equally apply for this embodiment and all further embodiments, as described below.

It is further understood that the micronized wax ($M_p$) as comprised in the composition (C) of the present invention, as detailed above, is selected in such a way that the requirements for the micronized wax ($M_p$) in terms of its particle size, as detailed above, are complied with. Therefore, depending on the end application of the composition (C), suitable micronized waxes ($M_p$) may belong to various classes as long as they comply with the requirements of having the correct particle sizes.

The micronized wax ($M_p$) may be commercially available or may be prepared. Said preparation of the micronized wax ($M_p$) may be carried out using conventional methods known to the skilled in the art such as melt dispersion techniques, spraying techniques such as spray chilling, milling techniques such as air jet milling, precipitation techniques, grinding techniques, or bead polymerization.

Suitable micronized waxes ($M_p$) for use in the composition (C) of the present invention, as detailed above, can be natural micronized waxes ($M_p$) or synthetic micronized waxes ($M_p$).

As non-limiting examples of suitable natural micronized waxes ($M_p$) having the required particle size properties, as detailed above, mention may be made of micronized carnauba wax, micronized sugar cane wax, micronized beeswax, micronized candelilla wax, micronized polymer hybrids thereof such as micronized hybrid wax of carnauba wax and hard paraffin, or mixtures of two or more thereof.

As non-limiting examples of suitable synthetic micronized waxes ($M_p$) having the required particle size properties, as detailed above, mention may be made of (i) micronized fluorocarbon waxes such as micronized polytetrafluoroethylene wax, micronized polytetrafluoroethylene coated waxes, micronized polymer hybrids thereof such as micronized hybrid wax of polyethylene-polytetrafluoroethylene wax, micronized hybrid wax of Fischer-Tropsch wax polytetrafluoroethylene wax and silica, or mixtures of two or more thereof, and (ii) micronized hydrocarbon waxes such as micronized Fischer-Tropsch wax, micronized polyethylene wax, micronized non-polar polyethylene wax, micronized oxidized high-density polyethylene wax, micronized polypropylene wax, micronized non-polar polypropylene wax, micronized polymer hybrids thereof such as micronized hybrid wax of Fischer-Tropsch wax and polyethylene wax, and (iii) micronized polyamide waxes notably including micronized ethylene-bis-stearamide wax, micronized erucamide wax, micronized stearamide wax, micronized amide wax made of sugar cane, micronized polymer hybrids thereof such as micronized hybrid wax of polyethylene wax and amide wax, micronized hybrid wax of Fischer-Tropsch wax and amide wax, micronized hybrid wax of polyethylene wax polypropylene wax Fischer-Tropsch wax and amide wax, or mixtures of two or more thereof.

Preferred micronized waxes ($M_p$) having the required particle size properties, as detailed above, are chosen among micronized carnauba wax, micronized sugar cane wax, micronized polytetrafluoroethylene wax, micronized hybrid wax of polyethylene-polytetrafluoroethylene wax, micronized Fischer-Tropsch wax, micronized polyethylene wax, micronized polypropylene wax, micronized polyamide wax, or micronized polymer hybrids thereof.

More preferred micronized waxes ($M_p$) having the required particle size properties, as detailed above, are chosen among micronized hybrid wax of polyethylene-polytetrafluoroethylene wax, micronized Fischer-Tropsch wax, micronized polyethylene wax, micronized polypropylene wax, or micronized polymer hybrids thereof.

According to certain embodiments of the composition (C), as detailed above, micronized waxes ($M_p$) are chosen among micronized hybrid wax of polyethylene-polytetrafluoroethylene wax, micronized Fischer-Tropsch wax, micronized polyethylene wax, micronized polypropylene wax, or micronized polymer hybrids thereof, while having a particle size $D_{90}$ equal to or less than 18.0 $\mu$m and a particle size $D_{50}$ equal to or less than 10.0 $\mu$m.

As said above, the amount of the micronized wax ($M_p$), as detailed above, is from 1.00 to 34.00 wt. %, relative to the total weight of the composition (C).

Within the context of the present invention, the expression "from 1.00 to 34.00 wt. % of the micronized wax ($M_p$)" refers either to the amount of micronized wax ($M_p$), when the composition (C) contains only one micronized wax ($M_p$), or to the sum of the amounts of micronized wax ($M_p$), when the composition (C) contains more than one micronized wax ($M_p$). This being said, it means that it is necessary that, when more than one micronized wax ($M_p$) is present, then it is the sum of the amounts of each of said micronized wax ($M_p$) that ranges from 1.00 to 34.00 wt. %, relative to the total weight of the composition (C).

Advantageously, the amount of the micronized wax ($M_p$), as detailed above, relative to the total weight of the composition (C), is equal to or greater than 2.00 wt. %, or equal to or greater than 5.00 wt. %, or equal to or greater than 8.00 wt. %, or equal to or greater than 10.00 wt. %.

It is further understood that the upper limit of the amount of the micronized wax ($M_p$), as detailed above, relative to the total weight of the composition (C), is equal to or less than 30.00 wt. %, preferably equal to or less than 25.00 wt. %, preferably equal to or less than 20.00 wt. %, preferably equal to or less than 18.00 wt. %, preferably equal to or less than 16.00 wt. %.

In a preferred embodiment of the composition (C) of the present invention, the micronized wax ($M_p$), as detailed above, relative to the total weight of the composition (C), is present in an amount from 2.00 to 25.00 wt. %, preferably in an amount from 5.00 to 20.00 wt. %, preferably in an amount from 8.00 to 18.00 wt. %, preferably in an amount from 10.00 to 16.00 wt. %.

According to certain embodiments of the present invention, the composition (C), as detailed above, may further comprise at least one pigment to enhance the appearance of the composition (C).

Within the context of the present invention, the expression "at least one pigment" is intended to denote one or more than one pigment. Mixtures of pigments can also be used for the purpose of the invention. In the remainder of the text, the expression "pigment" is understood, for the purposes of the present invention, both in the plural and the singular form.

Said pigments are known to those skilled in the art of wood coating compositions. Non-limiting examples of suitable pigments notably include: inorganic and organic pigments. As non-limiting examples of suitable inorganic pigments mention may be made of compounds of metals such as iron, zinc, titanium, lead, chromium, copper, cadmium, calcium, zirconium, cobalt, magnesium, aluminum, nickel, and other transition metals. Typically, some non-limiting examples of suitable inorganic pigments include iron oxides, including red iron oxides, yellow iron oxides, black iron oxides and brown iron oxides; carbon black, iron hydroxide, graphite, black micaceous iron oxide, aluminum flake pigments, pearlescent pigments; calcium carbonate; calcium phosphate; calcium oxide; calcium hydroxide; bismuth oxide; bismuth hydroxide; bismuth carbonate; copper carbonate; copper hydroxide; basic copper carbonate; silicon oxide; zinc carbonate; barium carbonate; barium hydroxide; strontium carbonate; zinc oxide; zinc phosphate; zinc chromate; barium chromate; chrome oxide, titanium dioxide, zinc sulfide, antimony oxide, or mixtures of two or more thereof. As non-limiting examples of suitable organic pigments mention may be made of monoazo (arylide) pigments such as PY3, PY65, PY73, PY74, PY97 and PY98; disazo (diarylide); disazo condensation; benzimidazolone; beta naphthol; naphthol: metal-organic complexes; isoindoline and isoindolinone; quinacridone; perylene; perinone; anthraquinone; diketopyrrolopyrrole; dioxazine; triacrylcarbonium; the phthalocyanine pigments, such as cobalt phthalocyanine, copper phthalocyanine, copper semichloro- or monochlorophthalocyanine, copper phthalocyanine, metal-free phthalocyanine, copper polychlorophthalocyanine, etc.; organic azo-compounds; organic nitro-compounds; polycyclic compounds such as phthalocyanine pigments, quinacridone pigments, perylene and perinone pigments; diketopyrrolopyrrole (DPP) pigments; thioindigo pigments; dioxazine pigments; quinophthalone pigments; triacrylcarbonium pigments, diaryl pyrrolopyroles, or mixtures of two or more thereof.

As to the amount of the pigments, it is understood that the skilled person in the art will practise said pigments in a suitable amount according to standard and general practice known by said skilled person in the art.

Typically, the amount of the pigments, as detailed above, when present, is from 0.05 wt. % to 30.00 wt. %, or from 1.00 wt. % to 25.00 wt. %, or from 2.50 to 20.00 wt. %, or from 5.00 to 17.50 wt. %, or from 7.50 to 15.00 wt. %, relative to the total weight of the composition (C).

According to certain embodiments of the present invention, the composition (C), as detailed above, may further comprise at least one other additional ingredient [ingredient (Ic), herein after] to enhance the appearance, storage, transport, handling and/or performance of the composition (C).

Within the context of the present invention, the expression "at least one other additional ingredients [ingredient (Ic), herein after]" is intended to denote one or more than one ingredient (Ic). Mixtures of ingredients (Ic) can also be used for the purpose of the invention. In the remainder of the text, the expression "ingredient (Ic)" is understood, for the purposes of the present invention, both in the plural and the singular form.

Said ingredients (Ic) are known to those skilled in the art of wood coating compositions. Non-limiting examples of ingredients (Ic) notably include: coalescing agents, fire retardants, drying agents, surfactants, buffers, UV stabilizers, neutralizers, moisture scavengers, thickeners, non-thickening rheology modifiers, dispersants, humectants, biocides such as pesticides, herbicides, insecticides, weedicides, miticides, fungicides, moldicides, algaecides, acaricides, nematicides, bactericides, rodenticides, wetting agents, plasticizers, antifoaming agents, defoaming agents, oxygen scavengers, anti-skinning agents, flowing agents, crosslinkers, anti-oxidants, fragrances, or mixtures of two or more thereof.

As non-limiting examples, suitable surfactants notably include anionic surfactants, nonionic surfactants, cationic surfactants, amphiphilic surfactants, or mixtures of two or more thereof. Preferably, the surfactant is selected from anionic surfactant, nonionic surfactants, or mixtures of two or more thereof.

As non-limiting examples, suitable drying agents notably include naphthenates, tallates, decanoates, dodecanoates, neodecanoates, octoates of cobalt, manganese, lead, zirconium, calcium, barium, zinc, cerium, cerium/lanthanum, iron, neodymium, bismuth, vanadium, or mixtures of two or more thereof. Alternatively, also non-conventional drying agents may be used such as aluminium alkoxides. Furthermore, complex amines such as 1,10-phenanthrolene and 2,2-dipyridyl may be added as synergists to the drying agents.

As to the amount of the ingredients (Ic), it is understood that the skilled person in the art will practise said additional ingredients (Ic) in a suitable amount according to standard and general practice known by said skilled person in the art.

Typically, the amount of the ingredients (Ic), as detailed above, when present, is from 0.05 wt. % to 20.00 wt. %, or from 0.10 wt. % to 15.00 wt. %, or from 0.10 wt. % to 10.00 wt. %, or from 0.10 wt. % to 5.00 wt. %, relative to the total weight of the composition (C).

According to a preferred embodiment of the present invention, the composition (C), as detailed above, comprises, relative to the total weight of the composition (C):

- from 70.00 to 90.00 wt. % of at least one drying oil chosen among linseed oil, sunflower oil, tung oil, safflower oil, soybean oil, poppy seed oil, tall oil, peanut oil, (dehydrated) castor oil, corn oil, rapeseed oil, sesame seed oil, rice germ oil, cottonseed oil, fish oil, herring oil, grape seed oil, flaxseed oil, chia oil, oiticica oil, walnut oil, camelina oil, hemp seed oil, or perilla oil;
- from 0.20 to 3.00 wt. % of at least one microcrystalline wax ($W_c$) having a congealing point from 75 °C to 92 °C;

- from 8.00 to 18.00 wt.% of at least one micronized wax ($M_p$) chosen among micronized carnauba wax, micronized sugar cane wax, micronized polytetrafluoroethylene wax, micronized hybrid wax of polyethylene-polytetrafluoroethylene wax, micronized Fischer-Tropsch wax, micronized polyethylene wax, micronized polypropylene wax, micronized polyamide wax, or micronized polymer hybrids thereof, having a particle size $D_{90}$ equal to or less than 22.0 $\mu$m and a particle size $D_{50}$ equal to or less than 12.0 $\mu$m;
- optionally at least one pigment;
- optionally at least one ingredient (Ic);

wherein the congealing point of the at least one microcrystalline wax ($W_c$) is measured according to the standard ASTM D938, and wherein the particle size of the at least one micronized wax ($M_p$) is measured according to the standard DIN ISO 13320.

According to a more preferred embodiment of the present invention, the composition (C), as detailed above, consists essentially of, relative to the total weight of the composition (C):

- from 70.00 to 90.00 wt. % of at least one drying oil chosen among linseed oil, sunflower oil, tung oil, soybean oil, poppy seed oil, tall oil, walnut oil, hemp seed oil, or perilla oil;
- from 0.25 to 2.00 wt. % of at least one microcrystalline wax ($W_c$) having a congealing point from 80 °C to 90 °C;
- from 8.00 to 18.00 wt.% of at least one micronized wax ($M_p$) chosen among micronized hybrid wax of polyethylene-polytetrafluoroethylene wax, micronized Fischer-Tropsch wax, micronized polyethylene wax, micronized polypropylene wax, or micronized polymer hybrids thereof, having a particle size $D_{90}$ equal to or less than 18.0 $\mu$m and a particle size $D_{50}$ equal to or less than 10.0 $\mu$m;
- from 0.00 wt. % to 30.00 wt. % of at least one pigment;
- from 0.10 wt. % to 10.00 wt. % of at least one ingredient (Ic);

wherein the congealing point of the at least one microcrystalline wax ($W_c$) is measured according to the standard ASTM D938, and wherein the particle size of the at least one micronized wax ($M_p$) is measured according to the standard DIN ISO 13320.

For the purpose of the present invention, the expression "consists essentially of" is intended to denote that any additional ingredient different from the at least one drying oil chosen among linseed oil, sunflower oil, tung oil, soybean oil, poppy seed oil, tall oil, walnut oil, hemp seed oil, or perilla oil, the at least one microcrystalline wax ($W_c$) having a congealing point from 80 °C to 90 °C, the at least one micronized wax ($M_p$) chosen among micronized Fischer-Tropsch wax, micronized polyethylene wax, micronized polypropylene wax, or micronized polymer hybrids thereof, having a particle size $D_{90}$ equal to or less than 18.0 $\mu$m and a particle size $D_{50}$ equal to or less than 10.0 $\mu$m, the at least one pigment, and the at least one ingredient (Ic), is present in minor amounts in said composition (C), being understood that these latter do not substantially modify the properties of said composition (C).

According to certain embodiments of the present invention, the composition (C), as detailed above, has a high shear viscosity, as measured at 20 °C by using a Brookfield viscometer DV-E with spindle 3 at a rotation speed of 30 rpm, equal to or less than 1100 mPa.s at 20 °C, preferably equal to or less than 900 mPa.s, preferably equal to or less than 700 mPa.s, preferably equal to or less than 600 mPa.s, preferably equal to or less than 500 mPa.s.

It is further understood that the composition (C), as detailed above, has advantageously a high shear viscosity, as measured at 20 °C by using a Brookfield viscometer DV-E with spindle 3 at a rotation speed of 30 rpm, equal to or greater than 200 mPa.s at 20 °C, preferably equal to or greater than 240 mPa.s, preferably equal to or greater than 260 mPa.s, preferably equal to or greater than 280 mPa.s, preferably equal to or greater than 300 mPa.s.

In a preferred embodiment of the present invention, the composition (C), as detailed above, has a high shear viscosity, as measured at 20 °C by using a Brookfield viscometer DV-E with spindle 3 at a rotation speed of 30 rpm, from 200 to 1100 mPa.s at 20 °C, preferably from 240 to 900 mPa.s, preferably from 260 to 700 mPa.s, preferably from 280 to 600 mPa.s, preferably from 300 to 500 mPa.s.

According to the present invention, the high shear viscosity of the composition (C), as detailed above, is measured at 20 °C by using a Brookfield viscometer DV-E with spindle 3 at a rotation speed of 30 rpm, as detailed in the experimental section below.

Another aspect of the present invention is a method for the manufacturing of the composition (C), as detailed above.

It is further understood that all definitions and preferences, as described above, equally apply for all further embodiments, as described below.

The composition (C) of the present invention can be prepared by a variety of methods known in the art. For manufacturing composition (C) of the present invention, several methods known in the art may adequately be used.

In one embodiment of the present invention, the method for the manufacturing of the composition (C), as detailed above, comprises intimate admixing of the alkyd resin or the drying oil, as detailed above, the microcrystalline wax ($W_c$), as detailed above, the micronized wax ($M_p$), as detailed above, optionally the at least one pigment, as detailed above, and optionally the at least one additional ingredient (Ic), as detailed above.

In a preferred embodiment of the present invention, the method for the manufacturing of the composition (C), as detailed above, comprises the steps of intimate admixing:

- from 58.00 to 95.00 wt. % of at least one alkyd resin or at least one drying oil, as detailed above;
- from 0.10 to 8.00 wt. % of at least one microcrystalline wax having a congealing point from 60 °C to 100 °C [microcrystalline wax ($W_c$), herein after];
- from 1.00 to 34.00 wt.% of at least one micronized wax having a particle size $D_{90}$ equal to or less than 36.0 μm and a particle size $D_{50}$ equal to or less than 20.0 μm [micronized wax ($M_p$), herein after];
- optionally at least one pigment, as detailed above;
- optionally at least one ingredient (Ic), as detailed above;

wherein all wt. % are relative to the total weight of the composition (C), wherein the congealing point of the microcrystalline wax ($W_c$) is measured according to the standard ASTM D938, and wherein the particle size of the micronized wax ($M_p$) is measured according to the standard DIN ISO 13320.

Typically said intimate admixing, as detailed above, may be carried out by using traditional mixers and blenders, high intensity mixers and electric stirrers.

It is understood that the skilled person in the art will carry out said intimate admixing according to general practice such as notably using optimal times, speeds, weights, volumes and batch quantities.

Furthermore, it is understood that any order of intimate admixing of the various components as comprised in the composition (C), as detailed above, is acceptable.

If desired, the microcrystalline wax ($W_c$), as detailed above, can first be mixed in at least part of the alkyd resin or the drying oil, as detailed above, thereby forming a first premix, said first premix is then further mixed with the micronized wax ($M_p$), as detailed above, optionally at least one pigment, as detailed above, optionally the ingredient (Ic), as detailed above, and optionally the remaining part of the alkyd resin or the drying oil. Alternatively, the micronized wax ($M_p$) can also be first uniformly dispersed in at least another part of the alkyd resin or the drying oil thereby forming a second premix, prior to be mixed with the first premix, as detailed above, optionally the at least one pigment, and optionally the ingredient (Ic), and optionally the remaining part of the alkyd resin or the drying oil.

It is further understood that the intimate admixing of the microcrystalline wax ($W_c$), as detailed above, in at least part of the alkyd resin or the drying oil, as detailed above, to obtain the first premix, as detailed above, can be advantageously carried out at a temperature equal to or greater than the congealing point of said microcrystalline wax ($W_c$), and further the intimate admixing of the micronized wax ($M_p$) in said first premix, as detailed above, said micronized wax ($M_p$) optionally being present in the second premix, as detailed above, optionally the at least one pigment, as detailed above, optionally the ingredient (Ic), as detailed above, and optionally the remaining part of the alkyd resin or the drying oil, can be advantageously carried out at a temperature lower than the congealing point of the microcrystalline wax ($W_c$). By way of example, the intimate admixing of the microcrystalline wax ($W_c$) in at least part of the alkyd resin or the drying oil to obtain the first premix is advantageously carried out at a temperature from 60 °C to 100 °C, and further the intimate admixing of the micronized wax ($M_p$) in said first premix, said micronized wax ($M_p$) optionally being present in the second premix, optionally the at least one pigment, optionally the ingredient (Ic), and optionally the remaining part of the alkyd resin or the drying oil, is advantageously carried out at a temperature from 20 °C to 50 °C.

Another aspect of the present invention is a method for treating a surface or at least part of a surface of a wood product wherein said wood product is treated with the composition (C), as detailed above.

It is further understood that all definitions and preferences, as described above, equally apply for all further embodiments, as described below.

As non-limiting examples of suitable wood products mention may be made of decking, siding, siding cladding, roof shingles, furniture, veneer, flooring, wood-based composite panels such as particle board (PB), hardboard, plywood, oriented strand board (OSB), flake board, chipboard and fibreboard such as medium density fibreboard (MDF), and high density fibreboard (HDF).

In general, the method for treating the surface or at least part of the surface of the wood product is not limited to wood products made of a particular type of wood.

Non-limiting examples of suitable types of wood notably include i. hardwood such as woods from dicotyledonous trees such as ash, mahogany, troko, beech, oak, maple, birch, walnut, teak, alder, aspen, elm, gum, poplar or willow, ii. softwood such as woods from coniferous trees such as larch, pine, fir, Douglas fir, hemlock, redwood, or spruce, or iii. certain other lignocellulosic materials such as bamboo, or hemp.

As non-limiting examples, suitable hardwood floorings notably include solid hardwood flooring such as solid parquet, or engineered hardwood flooring such as engineered parquet.

Preferred wood products are chosen among solid hardwood flooring, or engineered hardwood flooring.

Among the suitable manners for applying the composition (C), as detailed above, to the surface or at least part of the surface of the wood products, as detailed above, mention can be notably made of conventional application methods known to those skilled in the art of wood coating compositions such as painting, spraying such as air-atomized spraying, air-assisted spraying and airless spraying, flow-coating, transfer-coating, roller coating, brushing, impregnating, dipping, spreading, curtain coating, and the like by using conventional equipment such as but not limited to a sprayer, a roller coating machine, a cloth, a brush, a polishing machine with pads, and the like. Preferably, the composition (C) is applied to the surface or at least part of the surface of the wood products by spreading using a polishing machine with pads, or by roller coating using a roller coating machine.

If desired, prior to application of the composition (C), as detailed above, the surface or at least part of the surface of the wood products is preliminary roughened up, such as by mechanical abrasion.

As already mentioned above, due to the excellent spreadability of the composition (C), as detailed above, said composition (C) can be applied to the surface or at least part of the surface of wood products in low amounts, for instance in an amount from 8.0 gram per square meter [g/m², herein after] to 40.0 g/m², preferably from 8.5 g/m² to 30.0 g/m², preferably from 9.0 to 22.5 g/m², preferably from 10.0 g/m² to 15.0 g/m², thereby resulting in thin coating layers, for instance with an average thickness from 8.0 to 40.0 micron, preferably from 8.5 to 30.0 micron, preferably from 9.0 to 22.5 micron, preferably from 10.0 to 15.0 micron.

Furthermore, in the present invention, the inventors have surprisingly found that the composition (C), as detailed above, can be applied to the surface or at least part of the surface of wood products in one single layer while maintaining good hardness, abrasion resistance, scratch resistance, matting, antiblocking, water repellency, and slip resistance properties.

Another aspect of the present invention is a coated layer obtained by the method for treating the surface or at least part of the surface of the wood product, as detailed above, wherein said wood product is treated with the composition (C), as detailed above.

It is further understood that all definitions and preferences, as described above, equally apply for all further embodiments, as described below.

As already mentioned above, due to the excellent spreadability of the composition (C), as detailed above, the application of the composition (C) to the surface or at least part of the surface of wood products can result in thin coating layers, for instance coating layers with an average thickness from 8.0 to 40.0 micron, preferably from 8.5 to 30.0 micron, preferably from 9.0 to 22.5 micron, preferably from 10.0 to 15.0 micron.

Another aspect of the present invention is a use of the composition (C), as detailed above, in the method for treating the surface or at least part of the surface of the wood product, as detailed above.

It is further understood that all definitions and preferences, as described above, equally apply for all further embodiments, as described below.

If desired, prior to application, the composition (C), as detailed above, can be mixed with at least one accelerator to further enhance the drying properties of said composition (C).

Within the context of the present invention, the expression "at least one accelerator" is intended to denote one or more than one accelerator. Mixtures of accelerators can also be used for the purpose of the invention. In the remainder of the text, the expression "accelerator" is understood, for the purposes of the present invention, both in the plural and the singular form.

In general, said accelerators are known to those skilled in the art of wood coating compositions. As a non-limiting example of a suitable accelerator mention may be made of isocyanate-based accelerators which are known to those skilled in the art of wood coating compositions. As non-limiting examples of suitable isocyanate-based accelerators mention may be made of aromatic, aliphatic, and cycloaliphatic polyisocyanates. Non-limiting examples of aromatic polyisocyanates notably include 2,4-tolylene diisocyanate, 2,6-tolylene diisocyanate, xylylene diisocyanate, tetramethylxylene diisocyanate, triphenylmethane triisocyanate, 4,4'-methylenebis(phenyl isocyanate), 1,3-phenylene diisocyanate, 2,4,4'-diphenyl ether triisocyanate, 1,5-naphthalene diisocyanate, or oligomers or mixtures of two or more thereof. Non-limiting examples of aliphatic polyisocyanates notably include hexamethylene diisocyanate, or oligomers thereof. Non-limiting examples of cycloaliphatic polyisocyanates notably include isophorone diisocyanate, dicyclohexylmethane 4,4'-diisocyanate, 1,4-cyclohexylene diisocyanate, or oligomers or mixtures of two or more thereof.

As to the amount of the accelerator, as detailed above, the accelerator is mixed with the composition (C), as detailed above, in a weight ratio of the composition (C) to the accelerator from 15:1 to 1:1, preferably from 10:1 to 1:1, more preferably from 5:1 to 1:1.

## EXAMPLES

The invention will be now described in more details with reference to the following examples, whose purpose is merely illustrative and not intended to limit the scope of the invention.

### Test method

**High shear viscosity measurements:**

The high shear viscosity measurements were carried out at 20 °C by using a Brookfield viscometer DV-E with spindle 3 at a rotation speed of 30 rpm on a specimen of the compositions as listed in Table 1. Before measurement, the respective samples, which were initially stored at various temperatures, were first allowed during 90 minutes to adapt to 20 °C using a temperature storage machine having a constant temperature set at 20 °C. Then, the high shear viscosity was measured as expressed in mPa.s or centipoise (cP) at 20 °C using the Brookfield viscometer DV-E with spindle 3 at the rotation speed of 30 rpm.

**Rest material on pads:**

The rest material of the compositions as listed in Table 1 on the pads (i.e. beige pad 1 and white pad 2) was determined via measurement of the respective weight of each of said pads before polishing and after polishing wooden floor panels treated with the compositions as listed in Table 1 using a polishing machine equipped with said pads.

### General procedure for manufacturing composition (C):

Example 1 (Ex1), Comparative Example 2 (CEx2), and Comparative Example 3 (CEx3) were prepared by intimate admixing all the various components as described and listed in Table 1 (in essence nature and amounts) together with standard additional ingredients (Ic) until a uniformly dispersed mixture was obtained. The intimate admixing of the various components was carried out using an electric stirrer.

In Comparative Example 2 (CEx2), no use is made of a microcrystalline wax ($W_c$). Instead, the amount of the microcrystalline wax ($W_c$) as present in Example 1 (Ex1) was entirely replaced by an equal amount of standard additional ingredients ($I_C$). Intimate admixing was carried out as described above.

In Comparative Example 3 (CEx3), no use is made of a microcrystalline wax ($W_c$). Instead, the amount of the microcrystalline wax ($W_c$) as present in Example 1 (Ex1) was entirely replaced by an equal amount of the drying oil of class (I). Intimate admixing was carried out as described above.

All contents in Table 1 are given in wt. %, relative to the total weight of the respective compositions, unless stated otherwise.

**Table 1: Composition (C): Example 1 (Ex1) and Comparative Examples 2 and 3 (CEx2 and CEx3)**

| Components | Example 1 (Ex1) | Comparative Example 2 (CEx2) | Comparative Example 3 (CEx3) |
|---|---|---|---|
| drying oil of class (I) | 75.00 - 90.00 | 75.00 - 90.00 | 75.00 - 90.00 |
| microcrystalline wax ($W_c$) congealing point 80 - 90 °C | 0.25-2.00 | - | - |
| micronized wax ($M_p$) $D_{90} \leq 25.0\,\mu m$ and $D_{50} \leq 14.0\,\mu m$ | 8.00 - 20.00 | 8.00 - 20.00 | 8.00 - 20.00 |
| additional ingredients (Ic) | 0.10 - 5.00 | 0.10 - 5.00 | 0.10 - 5.00 |

### Example 1:

The compositions of Example 1 (Ex1) and Comparative Example 2 (CEx2), as listed in Table 1, were first heated at a storage temperature of 50 °C in an oven for 35 days. On several time points, i.e. after 0 days, 13 days, 21 days, 28 days, and 35 days, the respective high shear viscosities of Example 1 (Ex1) and Comparative Example 2 (CEx2) were measured at 20 °C in accordance with the test method as described above. After heating the respective compositions at a storage temperature of 50 °C in an oven for 35 days, said compositions were cooled over room temperature to a subsequent storage temperature of 3 °C in a refrigerator for 13 days. Again on several time points, i.e. after 42 days, and 48 days, the respective high shear viscosities of Example 1 (Ex1) and Comparative Example 2 (CEx2) were measured at 20 °C in accordance with the test method as described above. The results of this assessment are listed in Table 2.

**Table 2: high shear viscosity variation with temperature**

| | High shear viscosity (measured at 20 °C and expressed in cP) | | | | | | |
| --- | --- | --- | --- | --- | --- | --- | --- |
| | composition storage temperature 50 °C | | | | | composition storage temperature 3 °C | |
| Composition | day 0 | day 13 | day 21 | day 28 | day 35 | day 42 | day 48 |
| **Example 1 (Ex1)** | 295 | 435 | 390 | 420 | 399 | 345 | 342 |
| **Comparative Example 2 (CEx2)** | 785 | 930 | 725 | 775 | 810 | 715 | 695 |

The results in Table 2 show that when a microcrystalline wax ($W_c$) is present in the composition, even after prolonged storage at 50 °C and at 3 °C, the resulting Ex1 demonstrates a circa two-fold lower high shear viscosity at 20 °C when compared to CEx2 which does not comprise the microcrystalline wax ($W_c$) as present in Ex1. A lower high shear viscosity of the respective composition, regardless of temperature, as observed in case of Ex1 when compared to CEx2, enhances the composition's spreadability upon application to wood products.

*Example 2:*

The compositions of Example 1 (Ex1) and Comparative Example 2 (CEx2), as listed in Table 1, were first heated at a storage temperature of 50 °C in an oven for 35 days, followed by a storage temperature of 3 °C in a refrigerator for 13 days. Then, the compositions of Ex1 and CEx2 were allowed during 90 minutes to adapt to 20 °C using a temperature storage machine having a constant temperature set at 20 °C. In parallel, two untreated wooden floor panels made of oak each having a wood surface area equal to 29.85 $m^2$ were appropriately sanded with a sander using each of the sandpapers K40, K80, and K120, respectively, until a scratch-free surface was obtained. The wooden surface was then thoroughly cleaned of its dust residues using a vacuum cleaner followed by a pre-treatment of the wooden surface with a degreaser to further adequately remove small dust particles. After cleaning, when the wooden surface had completely dried, the surface of one wooden floor panel was treated with an amount of a mixture containing Ex1 and an isocyanate-based accelerator in a 3:1 weight ratio [mixture (A), herein after], while the surface of the other wooden floor panel was treated with an amount of a mixture containing CEx2 and the same isocyanate-based accelerator in the same 3:1 weight ratio [mixture (B), herein after], in both cases using a polishing machine with a first pad (i.e. beige pad 1). The excess of the respective mixture, in the one case the excess of mixture (A) and in the other case the excess of mixture (B), was subsequently removed within 15 minutes using the polishing machine with a second pad (i.e. white pad 2) so that the wooden surface felt hand-dry after removal of the excess of the respective mixture. The results of this assessment are listed in Table 3.

**Table 3: application to the surface of wooden floor panels**

| *Surface area oak floor: 29.85 $m^2$* | **Example 1 (Ex1)*** | **Comparative Example 2 (CEx2)*** |
| --- | --- | --- |
| total amount used (g) | 669 (100%) | 710 (100 %) |
| rest amount on beige pad 1 (g) | 137 (21 %) | 149 (21 %) |
| rest amount on white pad 2 (g) | 56 (8 %) | 65 (9 %) |
| effective amount to the floor (g) | 476 (71 %) | 497 (70 %) |
| working hours (h) | 0.75 | 1.25 |
| **amount applied to the floor (g/$m^2$)** | 22.4 | 23.8 |
| **amount on pads (g/$m^2$)** | 6.5 | 7.2 |
| **effective amount to the floor (g/$m^2$)** | 15.9 | 16.6 |
| * = recalculated values with reference to the respective composition and the isocyanate-based accelerator being mixed in a constant weight ratio equal to 3:1. | | |

When both Ex1 and CEx2 were first stored at 50 °C for 35 days and subsequently stored at 3 °C for 13 days, the results in Table 3 show that when a microcrystalline wax ($W_c$) is present in the composition and upon application of Ex1, as contained in mixture (A), and CEx2, as contained in mixture (B), to wooden floor panels made of oak, a lower amount of Ex1 was needed for obtaining identical technical properties when compared to CEx2 which does not comprise the microcrystalline wax ($W_c$) as present in Ex1 (22.4 g/m² of Ex1 versus 23.8 g/m² of CEx2), said technical properties as measured via a BGD 526 Wet Abrasion Scrub Tester and according to the standard ISO 2812-4:2007 for determining resistance to liquids.

Furthermore, as demonstrated by the results in Table 3, after application to wooden floor panels made of oak, a lower amount of Ex1 was left in both the pads, i.e. beige pad 1 and white pad 2, after polishing the respective wooden floor panels (6.5 g/m² of Ex1 versus 7.2 g/m² of CEx2). Particularly, in case of CEx2, the pads were saturated more rapidly and, consequently, more pads had to be used, while the surface of the wooden floor panel in case of CEx2 still demonstrated a greasy and oily appearance and feel.

*Example 3:*

Two closed transparent containers made of plastic were each separately filled with equal amounts of the compositions of Example 1 (Ex1) and Comparative Example 3 (CEx3), as listed in Table 1, respectively. Subsequently, the respective containers were left untouched for a time period of 40 days at 20 °C. After these 40 days at 20 °C, the two respective containers were visually compared with the human eye and accurately assessed. The results of this assessment are listed in Table 4.

**Table 4: stability against phase separation**

|  | Example 1 (Ex1) | Comparative Example 3 (CEx3) |
|---|---|---|
| **visual observation after 40 days at 20 °C** | no phase separation | clear phase separation into two distinct phases |

After the time period of 40 days at 20 °C, the closed transparent container containing Ex1 was still a uniformly dispersed composition and no phase separation nor an incipient phase separation was observed. On the other hand, with reference to the closed transparent container containing CEx3 a clear phase separation was observed after 40 days at 20 °C into two distinct phases wherein the dispersed micronized wax ($M_p$) demonstrated a tendency to float upwards in the closed transparent container containing CEx3.

**Claims**

1. A wood coating composition [composition (C), herein after] comprising, relative to the total weight of the composition (C):

    - from 58.00 to 95.00 weight percentage [wt. %, herein after] of at least one alkyd resin or at least one drying oil;
    - from 0.10 to 8.00 wt. % of at least one microcrystalline wax having a congealing point from 60 °C to 100 °C [microcrystalline wax ($W_c$), herein after];
    - from 1.00 to 34.00 wt.% of at least one micronized wax having a particle size $D_{90}$ equal to or less than 36 $\mu$m and a particle size $D_{50}$ equal to or less than 20 $\mu$m [micronized wax ($M_p$), herein after];

    wherein the congealing point of the microcrystalline wax ($W_c$) is measured according to the standard ASTM D938, and wherein the particle size of the at least one micronized wax ($M_p$) is measured according to the standard DIN ISO 13320.

2. The composition (C) according to claim 1, wherein the composition (C) comprises from 58.00 to 95.00 wt. %, relative to the total weight of the composition (C), of the at least one drying oil, and wherein the at least one drying oil is selected from the group consisting of linseed oil, sunflower oil, tung oil, safflower oil, soybean oil, poppy seed oil, tall oil, peanut oil, (dehydrated) castor oil, corn oil, rapeseed oil, sesame seed oil, rice germ oil, cottonseed oil, fish oil, herring oil, grape seed oil, flaxseed oil, chia oil, oiticica oil, menhaden oil, walnut oil, camelina oil, hemp seed oil, and perilla oil; preferably selected from the group consisting of linseed oil, sunflower oil, tung oil, safflower oil, soybean oil, poppy seed oil, tall oil, peanut oil, (dehydrated) castor oil, corn oil, rapeseed oil, sesame seed oil, rice germ oil, cottonseed oil, fish oil, herring oil, grape seed oil, flaxseed oil, chia oil, oiticica oil, walnut oil, camelina oil, hemp seed oil, and perilla oil; more preferably selected from the group consisting of linseed oil, sunflower oil, tung oil, soybean oil, poppy seed oil, tall oil, walnut oil, hemp seed oil, and perilla oil.

3. The composition (C) according to any one of claims 1 or 2, wherein the at least one drying oil, relative to the total weight of the composition (C), is present in an amount from 60.00 to 93.50 wt. %, preferably in an amount from 65.00 to 92.00 wt. %, more preferably in an amount from 70.00 to 90.00 wt. %.

4. The composition (C) according to any one of claims 1 to 3, wherein the microcrystalline wax ($W_c$) has a congealing point from 65 °C to 97 °C, preferably from 70 °C to 94 °C, more preferably from 75 °C to 92 °C, more preferably from 80 °C to 90 °C.

5. The composition (C) according to any one of claims 1 to 4, wherein the microcrystalline wax ($W_c$), relative to the total weight of the composition (C), is present in an amount from 0.15 to 6.00 wt. %, preferably in an amount from 0.15 to 5.00 wt. %, more preferably in an amount from 0.20 to 4.00 wt. %, more preferably in an amount from 0.20 to 3.00 wt. %, more preferably in an amount from 0.25 to 2.00 wt. %.

6. The composition (C) according to any one of claims 1 to 5, wherein the micronized wax ($M_p$) has a particle size $D_{90}$ equal to or less than 32.0 $\mu$m and a particle size $D_{50}$ equal to or less than 18.0 $\mu$m, preferably a particle size $D_{90}$ equal to or less than 29.0 $\mu$m and a particle size $D_{50}$ equal to or less than 16.0 $\mu$m, more preferably a particle size $D_{90}$ equal to or less than 25.0 $\mu$m and a particle size $D_{50}$ equal to or less than 14.0 $\mu$m, more preferably a particle size $D_{90}$ equal to or less than 22.0 $\mu$m and a particle size $D_{50}$ equal to or less than 12.0 $\mu$m, more preferably a particle size $D_{90}$ equal to or less than 18.0 $\mu$m and a particle size $D_{50}$ equal to or less than 10.0 $\mu$m.

7. The composition (C) according to any one of claims 1 to 6, wherein the micronized wax ($M_p$) has a particle size distribution:

   $D_{10} \leq 3.0$ $\mu$m and $D_{90} \leq 36.0$ $\mu$m and Dso $\leq 20.0$ $\mu$m;
   preferably, $D_{10} \leq 3.0$ $\mu$m and $D_{90} \leq 32.0$ $\mu$m and Dso $\leq 18.0$ $\mu$m;
   more preferably, $D_{10} \leq 3.0$ $\mu$m and $D_{90} \leq 29.0$ $\mu$m and $D_{50} \leq 16.0$ $\mu$m;
   more preferably, $D_{10} \leq 3.0$ $\mu$m and $D_{90} \leq 25.0$ $\mu$m and $D_{50} \leq 14.0$ $\mu$m;
   more preferably, $D_{10} \leq 3.0$ $\mu$m and $D_{90} \leq 22.0$ $\mu$m and $D_{50} \leq 12.0$ $\mu$m;
   more preferably, $D_{10} \leq 3.0$ $\mu$m and $D_{90} \leq 18.0$ $\mu$m and $D_{50} \leq 10.0$ $\mu$m.

8. The composition (C) according to any one of claims 1 to 7, wherein the micronized wax ($M_p$) is selected from the group consisting of micronized carnauba wax, micronized sugar cane wax, micronized beeswax, micronized candelilla wax, micronized hybrid wax of carnauba wax and hard paraffin, micronized polytetrafluoroethylene wax, micronized polytetrafluoroethylene coated waxes, micronized hybrid wax of polyethylene-polytetrafluoroethylene wax, micronized hybrid wax of Fischer-Tropsch wax polytetrafluoroethylene wax and silica, micronized Fischer-Tropsch wax, micronized polyethylene wax, micronized non-polar polyethylene wax, micronized oxidized high-density polyethylene wax, micronized polypropylene wax, micronized non-polar polypropylene wax, micronized hybrid wax of Fischer-Tropsch wax and polyethylene wax, micronized polyamide wax, micronized ethylene-bis-stearamide wax, micronized erucamide wax, micronized stearamide wax, micronized amide wax made of sugar cane, micronized hybrid wax of polyethylene wax and amide wax, micronized hybrid wax of Fischer-Tropsch wax and amide wax, micronized hybrid wax of polyethylene wax polypropylene wax Fischer-Tropsch wax and amide wax; preferably selected from the group consisting of micronized carnauba wax, micronized sugar cane wax, micronized polytetrafluoroethylene wax, micronized hybrid wax of polyethylene-polytetrafluoroethylene wax, micronized Fischer-Tropsch wax, micronized polyethylene wax, micronized polypropylene wax, and micronized polyamide wax; more preferably selected from the group consisting of polyethylene-polytetrafluoroethylene wax, micronized Fischer-Tropsch wax, micronized polyethylene wax, and micronized polypropylene wax.

9. The composition (C) according to any one of claims 1 to 8, wherein the micronized wax ($M_p$), relative to the total weight of the composition (C), is present in an amount from 2.00 to 25.00 wt. %, preferably in an amount from 5.00 to 20.00 wt. %, preferably in an amount from 8.00 to 18.00 wt. %, preferably in an amount from 10.00 to 16.00 wt. %.

10. The composition (C) according to any one of claims 1 to 9, wherein the composition (C) comprises at least one pigment and/or at least one additional ingredient [ingredient (Ic), herein after] selected from the group consisting of coalescing agents, fire retardants, drying agents, surfactants, buffers, UV stabilizers, neutralizers, moisture scavengers, thickeners, non-thickening rheology modifiers, dispersants, humectants, biocides such as pesticides, herbicides, insecticides, weedicides, miticides, fungicides, moldicides, algaecides, acaricides, nematicides, bactericides, rodenticides, wetting agents, plasticizers, antifoaming agents, defoaming agents, oxygen scavengers, anti-skinning agents, flowing agents, crosslinkers, anti-oxidants, and fragrances.

11. A method for the manufacturing of the composition (C), according to any one of claims 1 to 10, wherein the method comprises the steps of intimate admixing:

- from 58.00 to 95.00 wt. % of at least one alkyd resin or at least one drying oil;
- from 0.10 to 8.00 wt. % of at least one microcrystalline wax having a congealing point from 60 °C to 100 °C [microcrystalline wax ($W_c$), herein after];
- from 1.00 to 34.00 wt.% of at least one micronized wax having a particle size $D_{90}$ equal to or less than 36.0 $\mu$m and a particle size $D_{50}$ equal to or less than 20.0 $\mu$m [micronized wax ($M_p$), herein after];
- optionally at least one pigment;
- optionally at least one ingredient (Ic);

wherein all wt. % are relative to the total weight of the composition (C), wherein the congealing point of the microcrystalline wax ($W_c$) is measured according to the standard ASTM D938, and wherein the particle size of the micronized wax ($M_p$) is measured according to the standard DIN ISO 13320.

12. A method for treating a surface or at least part of a surface of a wood product wherein said wood product is treated with the composition (C), according to any one of claims 1 to 10, and wherein the composition (C) is applied to the surface of at least part of the surface of the wood product by painting, spraying such as air-atomized spraying, air-assisted spraying and airless spraying, flow-coating, transfer-coating, roller coating, brushing, impregnating, dipping, spreading, curtain coating, by using conventional equipment such as but not limited to a sprayer, a roller coating machine, a cloth, a brush, and a polishing machine with pads.

13. The method according to claim 12, wherein the wood product is selected from the group consisting of decking, siding, siding cladding, roof shingles, furniture, veneer, flooring, particle board (PB), hardboard, plywood, oriented strand board (OSB), flake board, chipboard, fibreboard, medium density fibreboard (MDF), and high density fibreboard (HDF).

14. The method according to any one of claims 12 or 13, wherein the composition (C), according to any one of claims 1 to 10, is applied to the surface or at least part of the surface of the wood product in an amount from 8.0 gram per square meter [g/m², herein after] to 40.0 g/m², preferably from 8.5 g/m² to 30.0 g/m², more preferably from 9.0 to 22.5 g/m², more preferably from 10.0 g/m² to 15.0 g/m².

15. A coated layer obtained by the method according to any one of claims 12 to 14, wherein said coated layer has an average thickness from 8.0 to 40.0 micron, preferably from 8.5 to 30.0 micron, more preferably from 9.0 to 22.5 micron, more preferably from 10.0 to 15.0 micron.

Europäisches
Patentamt

European
Patent Office

Office européen
des brevets

## EUROPEAN SEARCH REPORT

Application Number

EP 20 21 7130

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 217 051 A2 (CERA RICA NODA CO LTD [JP]) 26 June 2002 (2002-06-26) | 1-15 | INV. C09D191/00 C09D167/08 B27K3/00 |
| Y | * paragraphs [0001], [0010], [0013]; claims 1-4; example 1 *<br>* the whole document * | 1-15 | |
| X | CN 110 330 892 A (HANGZHOU YIBEI ENVIRONMENTAL PROTECTION TECH CO LTD) 15 October 2019 (2019-10-15) | 1-15 | |
| Y | * paragraph [0001]; claims 1,3; examples 1-3 *<br>* the whole document * | 1-15 | |
| T | Anonymous: "Teflon PTFE 7C fluoropolymer resin (Product Information)",<br>,<br>1 June 1999 (1999-06-01), XP055811772, Wilmington, DE 19880-0702, USA Retrieved from the Internet: URL:https://www.professionalplastics.com/professionalplastics/Teflon7C_DataSheet.pdf [retrieved on 2021-06-08]<br>* the whole document * | 1-15 | |
| T | Anonymous: "Carnauba wax - Wikipedia, the free encyclopedia",<br>,<br>3 July 2015 (2015-07-03), pages 1-3, XP055199934, Retrieved from the Internet: URL:https://en.wikipedia.org/wiki/Carnauba_wax [retrieved on 2015-07-03]<br>* the whole document * | 1-15 | |

TECHNICAL FIELDS SEARCHED (IPC)

C09J
B27K
C09D

-/--

The present search report has been drawn up for all claims

| Place of search | Date of completion of the search | Examiner |
|---|---|---|
| Munich | 9 June 2021 | olde Scheper, Bernd |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 20 21 7130

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | Anonymous: "Japan wax"<br>In: "Wikipedia",<br>30 November 2020 (2020-11-30),<br>XP055812046,<br>Retrieved from the Internet:<br>URL:https://en.wikipedia.org/wiki/Japan_wax><br>* the whole document * | 1-15 | |
| T | Anonymous: "Candelilla wax"<br>In: "Wikipedia",<br>25 June 2020 (2020-06-25), XP055812050,<br>Retrieved from the Internet:<br>URL:https://en.wikipedia.org/wiki/Candelilla_wax><br>* the whole document * | 1-15 | |
| X,D | US 2003/154885 A1 (KRENDLINGER ERNST [DE] ET AL) 21 August 2003 (2003-08-21) | 1-15 | |
| Y | * the whole document * | 1-15 | |
| X,D | US 2007/037001 A1 (GAO XINHAO [US] ET AL) 15 February 2007 (2007-02-15) | 1-15 | TECHNICAL FIELDS SEARCHED (IPC) |
| Y | * the whole document * | 1-15 | |
| X,D | US 4 857 578 A (HALL ROBERT M [US]) 15 August 1989 (1989-08-15) | 1-15 | |
| Y | * the whole document * | 1-15 | |

The present search report has been drawn up for all claims

| Place of search | Date of completion of the search | Examiner |
|---|---|---|
| Munich | 9 June 2021 | olde Scheper, Bernd |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 21 7130

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2021

| Patent document cited in search report | | Publication date | Patent family member(s) | | Publication date |
|---|---|---|---|---|---|
| EP 1217051 | A2 | 26-06-2002 | CN | 1359996 A | 24-07-2002 |
| | | | EP | 1217051 A2 | 26-06-2002 |
| | | | JP | 3690984 B2 | 31-08-2005 |
| | | | JP | 2002194299 A | 10-07-2002 |
| | | | US | 2002078859 A1 | 27-06-2002 |
| CN 110330892 | A | 15-10-2019 | NONE | | |
| US 2003154885 | A1 | 21-08-2003 | CN | 1429257 A | 09-07-2003 |
| | | | EP | 1287085 A1 | 05-03-2003 |
| | | | JP | 2003532777 A | 05-11-2003 |
| | | | US | 2003154885 A1 | 21-08-2003 |
| | | | WO | 0185855 A1 | 15-11-2001 |
| US 2007037001 | A1 | 15-02-2007 | AU | 2006279671 A1 | 22-02-2007 |
| | | | CA | 2619683 A1 | 22-02-2007 |
| | | | EP | 1954410 A2 | 13-08-2008 |
| | | | US | 2007037001 A1 | 15-02-2007 |
| | | | WO | 2007022114 A2 | 22-02-2007 |
| US 4857578 | A | 15-08-1989 | NONE | | |

EPO FORM P0459

For more details about this annex : see Official Journal of the European Patent Office, No. 12/82

**EP 4 019 600 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030154885 A1
- US 20070037001 A1
- US 4857578 A